# EUROPÄISCHE PATENTSCHRIFT

(11) **EP 0 979 966 B1**
(45) Veröffentlichungstag und Bekanntmachung des Hinweises auf die Patenterteilung: **29.10.2003**
(21) Anmeldenummer: 99111273.1
(22) Anmeldetag: 10.06.1999
(51) Int. Cl.: F16K 11/085

(54) **Mehrwegeventil**
Multiple way valve
Robinet à voies multiples

(30) Priorität: 11.08.1998 DE 29814385 U
(43) Veröffentlichungstag der Anmeldung: 16.02.2000
(73) Patentinhaber: Festo AG & Co, 73734 Esslingen (DE)
(72) Erfinder: Kühbauch, Heiko, 73757 Köngen (DE)
(74) Vertreter: Abel, Martin, Dipl.-Ing.

(56) Entgegenhaltungen:
- FR-A- 984 102
- US-A- 4 031 918
- US-A- 4 318 424
- US-A- 4 328 833
- US-A- 4 365 366
- US-A- 4 655 252
- US-A- 4 669 503
- US-A- 5 139 050

## Beschreibung

Die Erfindung betrifft ein Mehrwegeventil, das ein als Drehkörper ausgebildetes Ventilglied enthält, wobei sich verschiedene Steuerstellungen dadurch realisieren lassen, daß das Ventilglied in unterschiedliche Drehpositionen verbracht wird.

Bei einem aus der DE-OS 23 19 588 bekannten Mehrwegeventil entsprechenden Aufbaus ist ein Ventilgehäuse vorgesehen, das eine zylindrische Ventilkammer enthält, in die umfangsseitig mehrere in Umfangsrichtung beabstandete, mit weiterführenden Fluidkanälen verbundene Kanalöffnungen einmünden. Das Ventilglied ist am Umfang mit mehreren Aussparungen versehen, die durch Trennwände voneinander abgeteilt sind, wobei zur Abdichtung eine sich aus mehreren lamellenartigen Dichtungselementen zusammensetzende Dichtung vorgesehen ist, die an der Wand der Ventilkammer gleitend anliegt. Entsprechend der jeweils gewählten Steuerstellung werden zwei Paare von Kanalöffnungen mit ihren zugeordneten Fluidkanälen wahlweise voneinander abgetrennt oder miteinander verbunden.

Auf dem Sektor der Druckluftaufbereitung für pneumatische Anwendungen werden häufig sogenannte Wartungsgeräte eingesetzt, die die Druckluft von Verunreinigungen säubern und/oder einen gewünschten Arbeitsdruck regulieren. Um diese Wartungsgeräte während längerer Zeiten des Betriebsstillstandes vom anstehenden Druck zu entlasten, besteht dort Bedarf nach einem vorgeschalteten 3/2-Wegeventil, das je nach Schaltstellung entweder einen Fluiddurchlaß zuläßt oder die Druckguelle absperrt und gleichzeitig die dem Wartungsgerät zugeordnete Seite des Druckluftstranges entlüftet. Ein solches Ventil soll möglichst einfach und kompakt im Aufbau sein und über eine hohe Funktionssicherheit verfügen. Vor diesem Hintergrund verfügt das aus der DE-OS 23 19 588 bekannte Mehrwegeventil über gewisse Unzulänglichkeiten, die beispielsweise daraus resultieren, daß die zur Abdichtung getroffenen Maßnahmen mit einzelnen beweglichen Dichtlamellen sehr aufwendig sind und daß sich für die über den Umfang der Ventilkammer verteilt angeordneten Fluidkanäle ein hoher Platzbedarf einstellt.

Aus der US 4 328 833 geht ein Mehrwegeventil hervor, dessen Ventilgehäuse eine zylindrische Ventilkammer enthält, in die drei in Umfangsrichtung beabstandete umfangsseitige Kanalöffnungen, sowie mehrere axialseitige Kanalöffnungen einmünden. In der Ventilkammer befindet sich ein drehbewegliches Ventilglied, das einen axial zwischen zwei zylindrisch konturierten Begrenzungsabschitten angeordneten Steuerabschnitt aufweist. In dem Steuerabschnitt sind zwei in Umfangsrichtung beabstandete Aussparungen vorgesehen, die beide über jeweils eine Durchbrechung mit einer der axialseitigen Kanalöffhungen des Ventilgehäuses verbunden sind. Am Außenumfang des Ventilgliedes befindet sich eine einstückige Dichtung, die in Nuten des Ventilgliedes befestigt ist. Das Ventilglied kann in zwei Positionen verbracht werden, die bewirken, dass ein über eine umfangsseitige Kanalöffnung eingespeistes Fluid durch wahlweise eine der beiden anderen umfangsseitigen Kanalöffhungen wieder austritt, wobei das Fluid jeweils durch beide Aussparungen und durch beide axialseitigen Kanalöffnungen hindurchströmt.

Es ist somit die Aufgabe der vorliegenden Erfindung, ein mit einem drehbeweglichen Ventilglied ausgestattetes Mehrwegeventil zu schaffen, das bei einfachem und kompakten Aufbau über eine hohe Funktionssicherheit verfügt.

Gelöst wird diese Aufgabe durch ein Mehrwegeventil in einer Ausgestaltung als 3/2-Wegeventil, das über nachstehende Bestandteile verfügt:
- ein Ventilgehäuse, das eine zylindrische Ventilkammer enthält, in die wenigstens zwei in Umfangsrichtung beabstandete erste und zweite umfangsseitige Kanalöffnungen und eine axialseitige Kanalöffnung einmünden,
- ein drehbeweglich in der Ventilkammer angeordnetes, durch Verdrehen in verschiedenen Steuerstellungen positionierbares Ventilglied, das einen axial zwischen zwei zylindrisch konturierten Begrenzungsabschnitten angeordneten Steuerabschnitt aufweist, der auf Höhe der umfangsseitigen Kanalöffnungen zwei in Umfangsrichtung beabstandete und durch Trennwände voneinander abgeteilte erste und zweite Aussparungen enthält, von denen die erste Aussparung über eine den der axialseitigen Kanalöffnung zugeordneten Begrenzungsabschnitt durchsetzende Durchbrechung hindurch mit der axialseitigen Kanalöffnung kommuniziert und die im übrigen durch die Begrenzungsabschnitte axial verschlossen sind, und
- eine an den Außenumfang des aus Kunststoffmaterial bestehenden Ventilgliedes durch Spritzgießen fest angeformte, mit der zylindrischen Umfangswand der Ventilkammer zusammenarbeitende einstückige Dichtung, die über zwei die beiden Begrenzungsabschnitte konzentrisch umschließende Ringabschnitte sowie über längs den Außenflächen der Trennwände verlaufende und integral mit den Ringabschnitten verbundene Stegabschnitte verfügt,
- wobei die Umfangserstreckung der der zylindrischen Umfangswand der Ventilkammer zugewandten Öffnungen der Aussparungen so gewählt ist, daß sich das Ventilglied derart positionieren läßt, daß es in einer ersten Steuerstellung mit seiner ersten Aussparung die erste umfangsseitige Kanalöffnung überdeckt und diese unter gleichzeitiger Verbindung mit der axialseitigen Kanalöffnung von der zweiten umfangsseitigen Kanalöffnung abtrennt und in einer zweiten Steuerstellung mit seiner zweiten Aussparung eine Verbindung zwischen den beiden umfangsseitigen Kanalöffnung herstellt, wobei gleichzeitig die erste Aussparung und somit auch die axialseitige Kanalöffnung von diesen beiden umfangsseitigen Kanalöffnungen abgetrennt ist.

Das auf diese Weise vorliegende Mehrwegeventil verfügt über einen sehr kompakten Aufbau, da eine der Kanalöffnungen axialseitig angeordnet ist und dementsprechend im Bereich des zylindrischen Außenumfanges der Ventilkammer keinen Platz beansprucht. Dabei wird eine besonders vorteilhafte Kanalverknüpfung dadurch möglich, daß die axialseitige Kanalöffnung über eine den zugeordneten Begrenzungsabschnitt des Ventilgliedes durchsetzende Durchbrechung mit der ersten Aussparung kommuniziert, so daß sich die axialseitige Kanalöffnung mit der umfangsseitigen ersten Kanalöffnungen sehr einfach dadurch verbinden läßt, daß die besagte erste Aussparung in eine der ersten umfangsseitigen Kanalöffnung gegenüberliegende Position verdreht wird. Ein weiterer Grund für die kompakten Abmessungen, verbunden mit einer einfachen und kostengünstigen Herstellung, ist darin zu sehen, daß sich die Dichtung nicht aus getrennt zu montierenden Einzelteilen zusammensetzt, sondern als einstückige Dichtung ausgeführt ist, die fest durch Spritzgießen an das Ventilglied angeformt ist. Dabei sorgen die Stegabschnitte der Dichtung für eine Abdichtung in der Umfangsrichtung der Ventilkammer und die Ringabschnitte für eine Abdichtung in axialer Richtung, so daß unerwünschte Leckströme vermieden werden. Das Anformen der Dichtung mit der daraus herrührenden stoffschlüssigen Verbindung zum Ventilglied hat den weiteren Vorteil, daß die Dichtung an einem lokalen Abheben vom Ventilglied gehindert wird, was insbesondere auch einen Einsatz des Mehrwegeventils im Zusammenhang mit Vakuumanwendungen gestattet.

Vorteilhafte Weiterbildungen der Erfindung gehen aus den Unteransprüchen hervor.

Besonders kompakte Abmessungen ermöglicht das Mehrwegeventil bei einer Ausgestaltung als 3/2-Wegeventil, die über zwei sich diametral gegenüberliegende erste und zweite umfangsseitige Kanalöffnungen verfügt, die insbesondere in einer gemeinsamen Ebene mit der axialseitigen Kanalöffnung liegen können. In der Richtung rechtwinkelig zu dieser Ebene kann das Ventilgehäuse sehr schmal ausgeführt werden.

Die Dichtung besteht zweckmäßigerweise aus thermoplastischem Elastomermaterial. Das Ventilglied selbst kann ebenfalls aus thermoplastischem Kunststoffmaterial bestehen. Es bietet sich an, das Ventilglied mit der Dichtung in einem Zweikomponenten-Spritzgießverfahren zu fertigen.

Die Drehbetätigung des Ventilglieds geschieht zweckmäßigerweise manuell unter Vermittlung eines drehfest mit dem Ventilglied verbundenen Handbetätigungsgliedes, das aus dem Ventilgehäuse herausragt. In dem Bestreben nach einer kostengünstigen Herstellung sind das Ventilglied und das Handbetätigungsglied vorzugsweise einstückig miteinander verbunden und stellen ein intergrales Bauteil dar, das sich als Steuerelement bezeichnen läßt.

Die Ventilkammer kann nach Art einer Sackbohrung im Ventilgehäuse ausgenommen sein, wobei sich die axialseitige Kanalöffnung am Boden der Ventilkammer befindet und das Steuerelement mit dem Ventilglied voraus von der entgegengesetzten Axialseite her in die Ventilkammer eingesteckt ist. Berücksichtigt man noch eine zweckmäßigerweise vorhandene Sicherungseinrichtung zur axial unbeweglichen Fixierung zwischen dem Steuerelement und dem Ventilgehäuse, läßt sich das Mehrwegeventil somit sehr kostengünstig mit einem geringen Teileaufwand in Dreikomponenten-Bauweise realisieren. Kommt eine Sicherungseinrichtung zum Einsatz, die fester Bestandteil des Steuerelementes und/oder des Ventilgehäuses ist, läßt sich sogar eine Zweikomponenten-Bauform verwirklichen.

Nachfolgend wird die Erfindung anhand der beiliegenden Zeichnung näher erläutert. In dieser zeigen:
- Fig. 1: eine perspektivische Darstellung einer ersten Bauform des erfindungsgemäßen Mehrwegeventils in Explosionsdarstellung bei aufgeschnittenem Ventilgehäuse und in einer Ausgestaltung als 3/2-Wegeventil,
- Fig. 2: das Mehrwegeventil aus Fig. 1 im Querschnitt gemäß Schnittlinie II-II in einer eine Durchflußstellung repräsentierenden Steuerstellung des Ventilgliedes,
- Fig. 3: das Mehrwegeventil der Fig. 1 und 2 im Längsschnitt gemäß Schnittlinie III-III, wobei das Ventilglied selbst nicht geschnitten ist,
- Fig. 4: das Mehrwegeventil der Fig. 1 bis 3 im Längsschnitt gemäß Schnittlinie IV-IV entlang einer im Vergleich zur Fig. 3 um 90° verdrehten Schnittebene, und
- Fig. 5: einen weiteren Querschnitt durch das Mehrwegeventil in einer der Fig. 2 entsprechenden Schnittdarstellung, wobei das Ventilglied eine vorliegend eine Entlüftungsstellung darstellende andere Steuerstellung einnimmt.

Das in der Zeichnung abgebildete Mehrwegeventil verfügt über ein aus Metall und/oder Kunststoffmaterial bestehendes Ventilgehäuse 1 mit beim Ausführungsbeispiel quader- oder würfelförmiger Außenkontur.

In dem Ventilgehäuse 1 befindet sich eine zylindrisch konturierte Ventilkammer 2. Sie ist ausgehend von einer ersten Außenfläche 3 des Ventilgehäuses 1 sacklochartig in letzters eingebracht, wobei sie über eine Öffnung 4 zu dieser ersten Außenfläche 3 hin offen ist und auf der entgegengesetzten Axialseite durch eine Bodenwand 5 begrenzt wird.

In die Ventilkammer 2 münden zwei an der zylindrischen Umfangswand 6 der Ventilkammer 2 vorgesehene umfangsseitige Kanalöffnungen 7, 8. Sie stehen jeweils mit einem das Ventilgehäuse 1 durchsetzenden Fluidkanal 7', 8' in Verbindung, welche beiden Fluidkanäle 7', 8' beim Ausführungsbeispiel an einander entgegengesetzten zweiten und dritten Außenflächen 12, 13 des Ventilgehäuses 1 ausmünden. Letztere erstrecken sich beim Ausführungsbeispiel rechtwinkelig zu der ersten Außenfläche 3.

Die umfangsseitigen Kanalöffnungen 7, 8 sind vorzugsweise so plaziert, daß sie sich mit Bezug zur Längsachse 14 der Ventilkammer 2 diametral gegenüberliegen.

Eine als axialseitige Kanalöffnung 15 bezeichnete dritte Kanalöffnung mündet an der Bodenwand 5 in die Ventilkammer 2 ein. Sie steht mit einem dritten Fluidkanal 15' in Verbindung, der das Ventilgehäuse 1 durchsetzt und beim Ausführungsbeispiel an einer der ersten Außenfläche 3 entgegengesetzten vierten Außenfläche 16 des Ventilgehäuses 1 ausmündet.

Das Ausführungsbeispiel ist für einen Einsatz vorgesehen, bei dem die zweite umfangsseitige Kanalöffnung 8 mit einer insbesondere Druckluft liefernden Druckmittelquelle P und die erste umfangsseitige Kanalöffnung 7 mit einem beliebigen Verbraucher A verbunden wird. Die Verbindung erfolgt beispielsweise über nicht näher dargestellte Fluidleitungen, die sich mit den Fluidkanälen 7', 8' verbinden lassen, zu welchem Zweck letzteren geeignete Anschlußmittel zugeordnet sind, die beim Ausführungsbeispiel von in die Fluidkanäle 7', 8' eingebrachten Innengewinden gebildet sind. Die axialseitige Kanalöffnung 15 stellt beim Ausführungsbeispiel eine Entlüftungsöffnung dar und steht bei Druckluftanwendungen mit der Atmosphäre R in Verbindung, was unmittelbar über den dritten Fluidkanal 15' erfolgen kann, an den sich über Anschlußmittel der erwähnten Art zweckmäßigerweise ein Schalldämpfer anschließen läßt. Möglich wäre aber auch der Anschluß einer die Abluft vom Mehrwegeventil wegführenden Fluidleitung.

Somit bildet beim Ausführungsbeispiel der erste Fluidkanal 7' einen Arbeitskanal, der zweite Fluidkanal 8' einen Speisekanäl und der dritte Fluidkanal 15' einen Entlüftungskanal.

Als weiter Komponente verfügt das Mehrwegeventil über ein allgemein mit Bezugsziffer 17 bezeichnetes Steuerelement, das sich aus einem Ventilglied 18 und einem fest mit diesem verbundenen Handbetätigungsglied 19 zusammensetzt. Das Ventilglied 18 ist im wesentlich zylinderisch konturiert und dabei an die Innenkontur der Ventilkammer 2 angepaßt, wobei sich das Handbetätigungsglied 19 an den einen axialen Endbereich des Ventilgliedes 18 anschließt. In der abgebildeten bevorzugten Ausführungsform sind das Ventilglied 18 und das Handbetätigungsglied 19 einstückig miteinander verbunden, so daß das Steuerelement 17 ein integrales Bauteil darstellt. Letzteres ist mit dem Ventilglied 18 voraus über die Öffnung 4 hinweg in die Ventilkammer 12 eingesteckt, so daß das Ventilglied 18 in der Ventilkammer 2 sitzt und das Handbetätigungsglied 19 aus dem Ventilgehäuse 1 herausragt.

Das Steuerelement 17 stellt ein Drehglied dar, das sich um die Längsachse 22 des Ventilgliedes 18 relativ zum Ventilgehäuse 1 verdrehen läßt. Die Längsachse 22 des Ventilgliedes 18 fällt mit der Längsachse 14 der Ventilkammer 2 zusammen und bildet zweckmäßigerweise gleichzeitig die Längsachse des Steuerelements 17.

Um die Drehbetätigung ausführen zu können, besitzt das Handbetätigungsglied 19 eine zum Beispiel knauf- oder handgriffartige Betätigungspartie 23, die sich griffgünstig mit einer Hand erfassen läßt, um die zum Verdrehen erforderlichen Kräfte aufbringen zu können.

Zur Sicherung der relativen Axialposition zwischen dem Steuerelement 17 und dem Ventilgehäuse 1 ist eine Sicherungseinrichtung 23 vorhanden. Sie umfaßt beim Ausführungsbeispiel zwei stiftartige Sicherungselemente 24, die in quer zur Längsrichtung der Ventilkammer 2 verlaufende bohrungsartige Kanäle 25 eingesteckt sind, wobei sie die Ventilkammer 2 peripher mit wenigstens einem Abschnitt ihres Umfanges nach Art einer Tangente oder Sekante durchsetzen. Auf gleicher Höhe mit den Kanälen 25 sind am Steuerelement 17 zwei sich über einen Teil dessen Umfanges erstreckende nutartige Umfangsvertiefungen 26 vorgesehen, in die die Sicherungselemente 24 eingreifen. Durch das Zusammenwirken der Sicherungselemente 24 mit den axialen Begrenzungswänden der Umfangsnuten 26 ist das Steuerelement 17 mit Bezug zum Ventilgehäuse 1 axial unbeweglich fixiert, ohne die Drehbeweglichkeit zu behindern. Durch die Länge der Umgangsnuten 26 kann dabei der maximal mögliche Drehwinkel des Ventilgliedes 18 mit Bezug zur Ventilkammer 2 vorgegeben werden.

Anstelle zweier getrennter Umfangsnuten 26 könnte auch eine einzige ringsumlaufende Umfangsnut vorgesehen sein, in die die beiden Sicherungselemente 24 an unterschiedlichen Umfangsstellen eingreifen. Im übrigen könnten die beiden Sicherungselemente 24 Bestandteile eines insbesondere einstückigen, gabelförmigen Sicherungsteils sein. Denkbar wäre es ferner, eine andere Anzahl von Sicherungselemente vorzusehen und beispielsweise nur ein Sicherungselement. Im übrigen versteht sich, daß geeignete Vorkehrungen getroffen sind, die gewährleisten, daß die Sicherungselemente 24 die eingesteckte Position beibehalten. So können die Sicherungselemente beispielsweise unter radialer Vorspannung in die Kanäle 25 eingedrückt werden.

In Abhängigkeit von der momentan vorliegenden Drehposition des Ventilgliedes 18 mit Bezug zur Ventilkammer 2 lassen sich unterschiedliche Verknüpfungen zwischen den Fluidkanälen 7', 8', 15' realisieren. Diese Drehstellungen seien nachfolgend als Steuerstellungen bezeichnet. Um eine solche Ventilfunktion zu ermöglichen, enthält das Ventilglied 18 einen etwa auf axialer Höhe mit den umfangsseitigen Kanalöffnungen 7, 8 angeordneten Steuerabschnitt 27, der axial zwischen zwei zylindrisch konturierten und beispielsweise scheibenänlich gestalteten Begrenzungsabschnitten 28, 29 angeordnet ist.

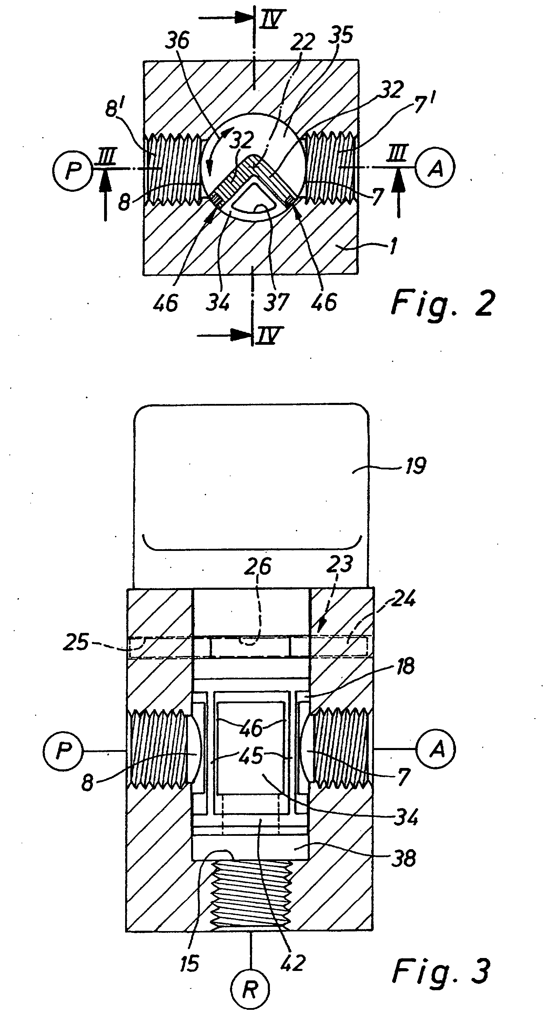

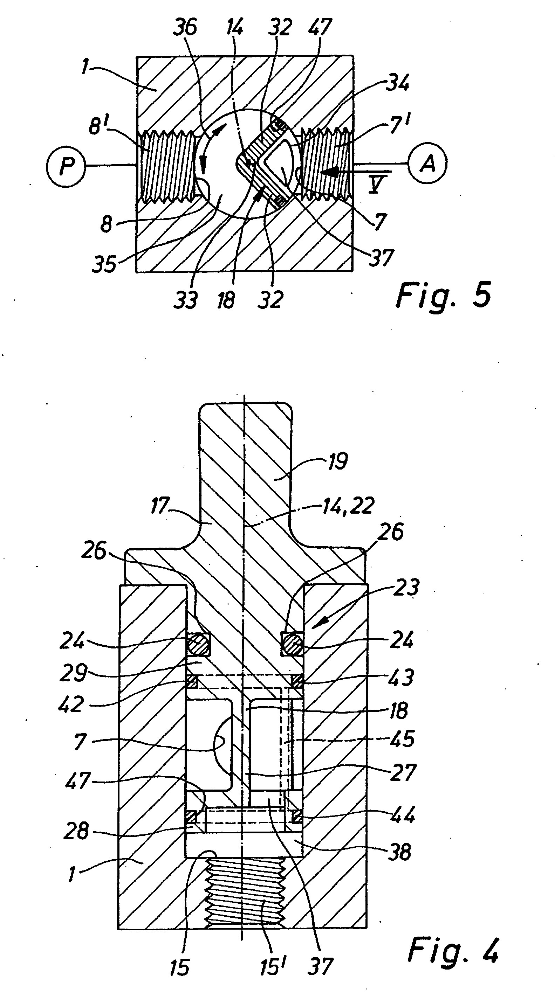

Der Steuerabschnitt 27 verfügt über mehrere und beispielsgemäß zwei Trennwände 32, die, im Querschnitt quer zu der von der Längsachse 22 vorgegebenen Drehachse gesehen, in einer aus Figuren 2 und 5 gut ersichtlichen V-förmigen Konfiguration angeordnet sind. Ausgehend von einem von der zylindrischen Umfangswand 6 radial beabstandeten Verbindungsbereich 33, der zweckmäßigerweise im Bereich der Drehachse 14 liegt, laufen die Trennwände 32 zur zylindrischen Umfangswand 6 hin auseinander, wobei sie beim Ausführungsbeispiel einen Winkel von etwa 90° einschließen. Somit ergeben sich zwei durch die Trennwände 32 voneinander abgeteilte umfangsseitige Aussparungen 34, 35, die in der mit der Drehrichtung zusammenfallenden Umfangsrichtung des Ventilgliedes 18 bzw. der Ventilkammer 2 zueinander beabstandet sind. Besagte Umfangs- und Drehrichtung ist in der Zeichnung durch Doppelpfeil 36 angedeutet.

Die somit vorhandenen, im Querschnitt kreissektorartig gestalteten Aussparungen 34, 35 sind an ihren beiden Axialseiten durch die Begrenzungsabschnitte 28, 29 begrenzt. Zusammen mit den zugeordneten Abschnitten der zylindrischen Umfangswand 6 definieren sie somit zwei voneinander abgetrennte Teilkammern der Ventilkammer 2.

Der bezüglich dem Handbetätigungsglied 19 axial entgegengesetzt angeordnete vordere Begrenzungsabschnitt 28 verfügt im Bereich einer ersten (34) der beiden Aussparungen über eine axial durchgehende Durchbrechung 37. Letztere verbindet die erste Aussparung 34 ständig mit dem der Bodenwand 5 benachbarten Endabschnitt 38 der Ventilkammer 2 und somit mit der in der Bodenwand 5 ausgebildeten axialseitigen Kanalöffnung 15. Alle übrigen Bestandteile der beiden Begrenzungsabschnitte 28, 29 sind durchbrechungslos ausgeführt.

Die mit der Durchbrechung 34 kommunizierende erste Aussparung 34 hat beim Ausführungsbeispiel mit Bezug zur Dreh- bzw. Längsachse 22 eine geringere Umfangserstreckung als die zweite Aussparung 35. So beträgt der Sektorwinkel der ersten Aussparung 34 beim Ausführungsbeispiel etwa 90° und derjenige der zweiten Aussparung 35 etwa 270°.

Die Durchbrechung 37 hat zweckmäßigerweise einen wenigstens annähernd dem Sektorwinkel der ersten Aussparung 34 entsprechenden sektorähnlichen Querschnitt, um eine möglichst große Querschnittsfläche und dementsprechend einen großen Strömungsquerschnitt zur Verfügung zu stellen.

Zur gegenseitigen Abdichtung der durch den Steuerabschnitt 27 voneinander abgeteilten Bereiche der Ventilkammer 2 ist am Außenumfang des Ventilgliedes 18 eine einstückige Dichtung 42 fest angeformt, die eine radiale Dichtungsfunktion hat und hierzu an der zylindrischen Umfangswand 6 der Ventilkammer 2 mit Dichtkontakt anliegt. Sie enthält zwei jeweils einen der beiden Begrenzungsabschnitte 28, 29 konzentrisch umschließende Ringabschnitte 43, 44, die über lineare, parallel zur Längsachse 22 verlaufende Stegabschnitte 45 verbunden sind, welche an den der zylindrischen Umfangswand 6 zugewandten Außenflächen 46 der beiden Trennwände 32 vorgesehen sind. Die beiden Stegabschnitte 45 und die beiden Ringabschnitte 43, 44 sind einstückig miteinander verbunden und bestehen aus geeignetem Dichtungsmaterial, das insbesondere durch einen Spritzgießvorgang am Ventilglied 18 festgelegt ist. Zweckmäßigerweise wird als Dichtmaterial ein thermoplastisches Elastomermaterial verwendet. Bei ebenfalls aus Kunststoffmaterial bestehendem Steuerelement 17 läßt sich dieses gemeinsam mit der Dichtung 42 im Rahmen eines Zweikomponenten-Gießverfahrens herstellen. Als Material für das Steuerelement 17 wird zweckmäßigersweise ebenfalls ein thermoplatisches Kunststoffmaterial verwendet.

Mit dem geschilderten Aufbau läßt sich in vorteilhafter Weise ein Mehrwegeventil realisieren, das sich durch einen bautei-' learmen Dreikomponentenaufbau zusammensetzt. Dabei bildet das Ventilgehäuse die erste Komponente, das sich aus dem Ventilglied 18, dem Handbetätigungsglied 19 und der Dichtung 42 zusammensetzende Steuerelement 17 die zweite Komponente und die Sicherungseinrichtung 23 die dritte Komponente. Greift man desweiteren auf eine integral mit dem Steuerelement 17 und/oder mit dem Ventilgehäuse 1 ausgeführte Sicherungseinrichtung zurück, läßt sich sogar ein Zweikomponentenaufbau realisieren, der sich durch einen besonders geringen Montageaufwand auszeichnet. Die Sicherungseinrichtung 23 könnte hierbei von einer Rastverbindungseinrichtung gebildet sein.

Wie aus der Zeichnung hervorgeht, kann das Ventilglied 18 im Bereich der Dichtung 42 über in den Außenumfang eingebrachte nutartige Vertiefungen 47 verfügen, in die die Dichtung 42 derart eingeformt ist, daß sie mit einem Dichtbereich radial übersteht, welcher elastisch nachgiebig und insbesondere unter Vorspannung an der zylindrischen Umfangswand 6 anliegt, so daß unter Gewährleistung der Verdrehbarkeit des Ventilgliedes 18 eine sichere Abdichtung vorliegt.

Durch die geschilderte Ausgestaltung der Aussparungen 34, 35 wird erreicht, daß deren der zylindrischen Umfangswand 6 zugewandte, radial orientierte Öffnungen sich durch Verdrehen des Ventilgliedes 18 so positionieren lassen, daß mit dem Mehrwegeventil eine 3/2-Ventilfunktion verwirklicht werden kann. Eine solche stellt sich beim Ausführungsbeispiel wie folgt dar:

Das Ventilglied 18 läßt sich durch Verdrehen über das Handbetätigungsglied 19 in der aus Fig. 5 hervorgehenden ersten Steuerstellung positionieren, die beim Ausführungsbeispiel eine Entlüftungsstellung bildet. Hier ist die erste Aussparung 34 der ersten umfangsseitigen Kanalöffnung 7 zugewandt, die dabei von der ersten Aussparung 34 bzw. deren radialer Öffnung überdeckt wird. Die die Öffnung der ersten Aussparung 34 rahmenartig umgrenzenden Abschnitte der Dichtung 42 liegen dabei im Umfangsbereich der ersten umfangsseitigen Kanalöffnung 7 an der zylindrischen Umfangswand 6 der Ventilkammer 2 dichtend an. Die beiden umfangsseitigen Kanalöffnungen 7, 8 sind somit voneinander abgetrennt und die im Arbeitskanal 7' anstehende Druckluft wird über die Durchbrechung 37 hinweg zur axialseitigen Kanalöffnung 15 und dem mit dieser kommunizierenden Entlüftungskanal 15' entlüftet. Die im Speisekanal 8' anstehende Druckluft wird durch das Ventilglied 18 zurückgehalten, da die der zweiten umfangsseitigen Kanalöffnung 8 zugewandte zweite Aussparung 35 durch zum einen die Trennwände 32 und zum andern die Begrenzungsabschnitte 28, 29 vollständig abgesperrt ist.

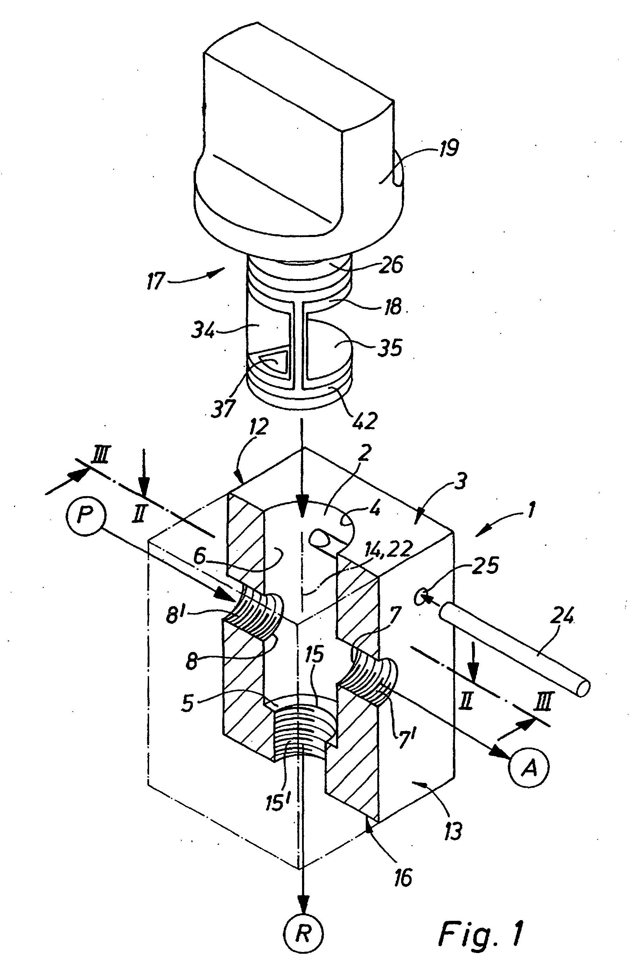

Durch Verdrehen um die Längsachse 22 läßt sich das Ventilglied 18 in die in Fig. 1 bis 4 vorliegende zweite Steuerstellung bewegen, die beim Ausführungsbeispiel eine Durchflußstellung darstellt. Hier liegt die erste Aussparung 34 einem zwischen den beiden umfangsseitigen Kanalöffnungen 7, 8 liegenden öffnungslosen Wandabschnitt der zylindrischen Umfangswand 6 gegenüber, während die über eine wesentlich größere Umfangserstreckung verfügende zweite Aussparung 35 mit beiden umfangsseitigen Kanalöffnungen 7, 8 kommuniziert. Das Druckmedium kann nun vom Speisekanal 8' durch die zweite Aussparung 35 hindurch in den Arbeitskanal 7' überströmen, wobei gleichzeitig der Entlüftungskanal 15' von dieser Fluidverbindung abgesperrt ist.

Somit liegt insgesamt eine 3/2-Ventilfunktion vor, bei der der Arbeitskanal 7' wahlweise mit dem Speisekanal 8' oder mit dem Entlüftungskanal 15' verbindbar ist, während gleichzeitig der jeweils andere Kanal abgetrennt ist.

## Patentansprüche

1. Mehrwegeventil, in einer Ausgestaltung als 3/2-Wegeventil,
- mit einem Ventilgehäuse (1), das eine zylindrische Ventilkammer (2) enthält, in die wengistens zwei in Umfangsrichtung (36) beabstandete erste und zweite umfangsseitige Kanalöffnungen (7, 8) und eine axialseitige Kanalöffnung (15) einmünden,
- mit einem drehbeweglich in der Ventilkammer (2) angeordneten, durch Verdrehen in verschiedenen Steuerstellungen positionierbaren Ventilglied (18), das einen axial zwischen zwei zylindrisch konturierten Begrenzungsabschnitten (28, 29) angeordneten Steuerabschnitt (27) aufweist, der auf Höhe der umfangsseitigen Kanalöffnungen (7, 8) zwei in Umfangsrichtung (36) beabstandete und durch Trennwände (32) voneinander abgeteilte erste und zweite Aussparungen (34, 35) enthält, von denen die erste Aussparung (34) über eine den der axialseitigen Kanalöffnung (15) zugeordneten Begrenzungsabschnitt (28) durchsetzende Durchbrechung (37) hindurch mit der axialseitigen Kanalöffnung (15) kommuniziert und die im übrigen durch die Begrenzungsabschnitte (28,29) axial verschlossen sind, und
- mit einer an den Außenumfang des aus Kunststoffmaterial bestehenden Ventilgliedes (18) durch Spritzgießen fest angeformten, mit der zylindrischen Umfangswand (6) der Ventilkammer (2) zusammenwirkenden einstückigen Dichtung (42), die über zwei die beiden Begrenzungsabschnitte (28, 29) konzentrisch umschließende Ringabschnitte (43, 44) sowie über längs den Außenflächen (46) der Trennwände (32) verlaufende und integral mit den Ringabschnitten (43, 44) verbundene Stegabschnitte (45) verfügt,
- wobei die Umfangserstreckung der der zylindrischen Umfangswand (6) der Ventilkammer (2) zugewandten Öffnungen der Aussparungen (34, 35) so gewählt ist, daß sich das Ventilglied (18) derart positionieren läßt, daß es in einer ersten Steuerstellung mit seiner ersten Aussparung (34) die erste umfangsseitige Kanalöffnung (7) überdeckt und diese unter gleichzeitiger Verbindung mit der axialseitigen Kanalöffnung (15) von der zweiten umfangsseitigen Kanalöffnung (8) abtrennt und in einer zweiten Steuerstellung mit seiner zweiten Aussparung (35) eine Verbindung zwischen den beiden umfangsseitigen Kanalöffnungen (7, 8) herstellt, wobei gleichzeitig die erste Aussparung und somit auch die axialseitige Kanalöffnung (15) (34) von diesen beiden umfangsseitigen Kanalöffnungen (7, 8) abgetrennt ist.

2. Mehrwegeventil nach Anspruch 1, **dadurch gekennzeichnet, dass** sich die beiden umfangsseitigen Kanalöffnungen (7, 8) diametral gegenüberliegen.

3. Mehrwegeventil nach Anspruch 2, **dadurch gekennzeichnet, daß** die erste umfangsseitige Kanalöffnung (7) einem Arbeitskanal (7'), die zweite umfangsseitige Kanalöffnung (8) einem Speisekanal (8') und die axialseitige Kanalöffnung (15) einem Entlüftungskanal (15') zugeordnet ist.

4. Mehrwegeventil nach einem der Ansprüche 1 bis 3, **dadurch gekennzeichnet, daß** die Dichtung (42) aus thermoplastischem Elastomermaterial bestehendt.

5. Mehrwegeventil nach einem der Ansprüche 1 bis 4, **dadurch gekennzeichnet, daß** das Ventilglied (18) an seiner der Durchbrechung (34) axial entgegengesetzten Seite mit einem aus dem Ventilgehäuse (1) herausragenden Handbetätigungsglied (19) versehen ist.

6. Mehrwegeventil nach Anspruch 5, **dadurch gekennzeichnet, daß** das Ventilglied (18) und das Handbetätigungsglied (19) einstückig miteinander verbunden sind.

7. Mehrwegeventil nach Anspruch 5 oder 6, **dadurch gekennzeichnet, daß** die Ventilkammer (2) nach Art einer Sackbohrung im Ventilgehäuse (1) ausgebildet ist, wobei sich die axialseitige Kanalöffnung (15) am Boden der Ventilkammer (2) befindet und ein sich aus dem Ventilglied (18) und dem Handbetätigungsglied (19) zusammensetzendes drehbares Steuerelement (17) von der dem Boden entgegengesetzten Axialseite her in die Ventilkammer (2) eingesteckt ist.

8. Mehrwegeventil nach Anspruch 7, **gekennzeichnet durch** eine zur axialen Fixierung zwischen Ventilgehäuse (1) und Steuerelement (17) dienende Sicherungseinrichtung (23).

9. Mehrwegeventil nach Anspruch 8, **dadurch gekennzeichnet, daß** die Sicherungseinrichtung (23) wenigstens ein am Ventilgehäuse (1) festgelegtes stiftartiges Sicherungselement (24) aufweist, das quer zur Längserstreckung der Ventilkammer (2) verläuft und in eine Umfangsnut (26) des Steuerelementes (17) eingreift.

10. Mehrwegeventil nach einem der Ansprüche 5 bis 9, **gekennzeichnet durch** einen Dreikomponentenaufbau bestehend aus dem Ventilgehäuse (1), einem sich aus dem Ventilglied (18) und dem Drehbetätigungsglied (19) zusammensetzenden Steuerelement (17) und einer zur axialen Fixierung zwischen Ventilgehäuse (1) und Steuerelement (17) dienenden Sicherungseinrichtung (23).

11. Mehrwegeventil nach einem der Ansprüche 1 bis 10, **dadurch gekennzeichnet, daß** der Steuerabschnitt (27) des Ventilgliedes (18) über lediglich zwei Trennwände (32) verfügt, die, im Querschnitt quer zur Drehachse gesehen, in V-förmiger Konfiguration angeordnet sind, so daß sich zwei im Querschnitt sektorartige Aussparungen (34, 35) ergeben.

12. Mehrwegeventil nach Anspruch 11, **dadurch gekennzeichnet, daß** die mit der Durchbrechung (37) kommunizierende erste Aussparung (34) bezogen auf die Drehachse des Ventilgliedes (18) eine geringere Umfangserstreckung aufweist als die zweite Aussparung (35).

13. Mehrwegeventil nach Anspruch 11 oder 12, **dadurch gekennzeichnet, daß** die mit der ersten Aussparung (34) kommunizierende Durchbrechung (37) einen sektorähnlichen Querschnitt aufweist.

## Claims

1. Multiway valve in the form of a 3/2-way valve,
- with a valve casing (1) containing a cylindrical valve chamber (2) into which lead at least two first and second peripheral-side passage openings (7, 8) spaced apart in the circumferential direction (36), and an axial-side passage opening (15),
- with a valve member (18) mounted in the valve chamber (2) so as to be capable of turning and able to be set in various control positions by turning, and having a control section (27) arranged axially between two cylindrically-shaped boundary sections (28, 29) which, at the level of the peripheral-side passage openings (7, 8), contains two first and second recesses (34, 35) spaced apart in the circumferential direction (36) and divided from one another by partition walls (32), with the first recess (34) communicating with the axial-side passage opening (15) through an opening (37) passing through the boundary section (28) assigned to the axial-side passage opening (15), and which recesses are otherwise axially closed by the boundary sections (28, 29), and
- with a one-piece seal (42), permanently moulded by injection moulding to the outer periphery of the valve member (18) made of plastic material, and working in conjunction with the cylindrical peripheral wall (6) of the valve chamber (2), and having two ring sections (43, 44) concentrically surrounding the two boundary sections (28, 29), together with web sections (45) running along the outer faces (46) of the partition walls (32) and joined integrally to the ring sections (43, 44),
- wherein the circumferential extent of the openings of the recesses (34, 35) facing the cylindrical peripheral wall (6) of the valve chamber (2) is chosen so that the valve member (18) may be positioned in such a way that in a first control position with its first recess (34) it covers the first peripheral-side passage opening (7), separating the latter from the second peripheral-side passage opening (8) while simultaneously making connection with the axial-side passage opening (15), and in a second control position with its second recess (35) it makes a connection between the two peripheral-side passage openings (7, 8), while at the same time the first recess (34) and thus also the axial-side passage opening (15) are separated from these two peripheral-side passage openings (7, 8).

2. Multiway valve according to claim 1, **characterised in that** the two peripheral-side passage openings (7, 8) lie diametrically opposite one another.

3. Multiway valve according to claim 2, **characterised in that** the first peripheral-side passage opening (7) is assigned an operating passage (7'), the second peripheral-side passage opening (8) is assigned a feed passage (8') and the axial-side passage opening (15) is assigned a vent passage (15').

4. Multiway valve according to any of claims 1 to 3, **characterised in that** the seal (42) is made of thermoplastic elastomer material.

5. Multiway valve according to any of claims 1 to 4 **characterised in that** the valve member (18), on that side of it which is axially opposite its opening (34), is provided with a manual operation element (19) projecting from the valve casing (1).

6. Multiway valve according to claim 5, **characterised in that** the valve member (18) and the manual operation element (19) are joined together in one piece.

7. Multiway valve according to claim 5 or 6, **characterised in that** the valve chamber (2) is formed in the valve casing (I) in the manner of a blind hole, wherein the axial-side passage opening (15) is at the base of the valve chamber (2) and a rotatable control element (17) comprised of the valve member (18) and the manual operation element (19) is inserted into the valve chamber (2) from the axial side opposite the base.

8. Multiway valve according to claim 7, **characterised by** a securing device (23) to provide axial fixing between valve casing (1) and control element (17).

9. Multiway valve according to claim 8, **characterised in that** the securing device (23) has one or more pin-like securing elements (24) fixed to the valve casing (1), running at right-angles to the longitudinal extent of the valve chamber (2) and engaging in a circumferential slot (26) of the control element (17).

10. Multiway valve according to any of claims 5 to 9, **characterised by** a three-component structure comprising the valve casing (1), a control element (17) comprised of the valve member (18) and the rotary operating element (19), and a securing device (23) providing axial fixing between valve casing (1) and control element (17).

11. Multiway valve according to any of claims 1 to 10, **characterised in that** the control section (27) of the valve member (18) has only two partition walls (32) which, viewed in cross-section at right-angles to the axis of rotation, are arranged in a V-shaped configuration, resulting in two recesses (34, 35), sector-like in cross-section.

12. Multiway valve according to claim 11, **characterised in that**, relative to the axis of rotation of the valve member (18), the first recess (34) communicating with the opening (37) has a smaller circumferential extent than the second recess (35).

13. Multiway valve according to claim 11 or 12, **characterised in that** the opening (37) communicating with the first recess (34) has a sector-like cross-section.

## Revendications

1. Soupape à plusieurs voies, réalisée sous la forme d'une soupape 3/2 voies,
- comportant un boîtier de soupape (1) qui contient une chambre de soupape (2) cylindrique dans laquelle débouchent au moins deux premières et deuxièmes ouvertures de canal (7, 8) périphériques, espacées dans la direction périphérique (36), ainsi qu'une ouverture de canal (15) côté axial,
- comportant un obturateur de soupape (18) monté mobile en rotation dans la chambre de soupape (2), qui peut être positionné par rotation dans différentes positions de commande et qui comporte un tronçon de commande (27) disposé axialement entre deux tronçons de délimitation (28, 29) de contour cylindrique, lequel tronçon de commande contient, à la hauteur des ouvertures de canal (7, 8) périphériques, deux première et deuxième découpes (34, 35) espacées dans la direction périphérique (36) et séparées l'une de l'autre par des cloisons (32), dont la première découpe (34) communique, par un ajour (37) traversant le tronçon de délimitation (28) associé à l'ouverture de canal (15) côté axial, avec l'ouverture de canal (15) côté axial, et qui sont par ailleurs fermées axialement par les tronçons de délimitation (28, 29), et
- comportant une garniture d'étanchéité (42) d'une seule pièce, venue de moulage par injection sur le pourtour extérieur de l'obturateur de soupape (18) en matière plastique, coopérant avec la paroi périphérique (6) cylindrique de la chambre de soupape (2), laquelle garniture d'étanchéité possède des tronçons annulaires (43, 44) entourant concentriquement les deux tronçons de délimitation (28, 29), ainsi que des tronçons de nervure (45) s'étendant le long des surfaces extérieures (46) des cloisons (32) et reliés d'un bloc aux tronçons annulaires (43, 44),
- dans laquelle l'étendue périphérique des ouvertures des découpes (34, 35), tournées vers la paroi périphérique (6) cylindrique de la chambre de soupape (2), est choisie de manière que l'obturateur de soupape (18) puisse être positionné de façon que dans une première position de commande il recouvre, par sa première découpe (34), la première ouverture de canal (7) côté périphérie avec liaison simultanée avec l'ouverture de canal (15) côté axial, et la sépare de la deuxième ouverture de canal (8) côté périphérie, et dans une deuxième position de commande, il réalise, par sa deuxième découpe (35), une liaison entre les deux ouvertures de canal (7, 8) côté périphérie, la première découpe (34) et donc aussi l'ouverture de canal (15) côté axial étant séparées en même temps de ces deux ouvertures de canal (7, 8) côté périphérie.

2. Soupape à plusieurs voies selon la revendication 1, **caractérisée en ce que** les deux ouvertures de canal (7, 8) côté périphérie sont diamétralement opposées.

3. Soupape à plusieurs voies selon la revendication 2, **caractérisée en ce que** la première ouverture de canal (7) côté périphérie est associée à un canal de travail (7'), la deuxième ouverture de canal (8) côté périphérie à un canal d'alimentation (8') et l'ouverture de canal (15) côté axial à un canal de purge (15').

4. Soupape à plusieurs voies selon l'une des revendications 1 à 3, **caractérisée en ce que** la garniture d'étanchéité (42) est constituée d'une matière élastomère thermoplastique.

5. Soupape à plusieurs voies selon l'une des revendications 1 à 4, **caractérisée en ce que** l'obturateur de soupape (18) est pourvu, sur son côté opposé axialement à l'ajour (34), d'un organe d'actionnement manuel (19) ressortant du boîtier de soupape (1).

6. Soupape à plusieurs voies selon la revendication 5, **caractérisée en ce que** l'obturateur de soupape (18) et l'organe d'actionnement manuel (19) sont reliés entre eux d'une seule pièce.

7. Soupape à plusieurs voies selon la revendication 5 ou 6, **caractérisée en ce que** la chambre de soupape (2) est réalisée à la manière d'un trou borgne dans le boîtier de soupape (1), l'ouverture de canal (15) côté axial se trouvant au fond de la chambre de soupape (2) et un élément de commande (17) tournant, se composant de l'obturateur de soupape (18) et de l'organe d'actionnement manuel (19), étant emboîté dans la chambre de soupape (2), depuis le côté axial opposé au fond.

8. Soupape à plusieurs voies selon la revendication 7, **caractérisée par** un dispositif de blocage (23) servant à la liaison axiale entre le boîtier de soupape (1) et l'élément de commande (17).

9. Soupape à plusieurs voies selon la revendication 8, **caractérisée en ce que** le dispositif de blocage (23) comporte au moins un élément de blocage (24) de type goupille fixé au boîtier de soupape (1), qui s'étend transversalement à l'étendue longitudinale de la chambre de soupape (2) et s'engage dans une rainure périphérique (26) de l'élément de commande (17).

10. Soupape à plusieurs voies selon l'une des revendications 5 à 9, **caractérisée par** une construction à trois composants, constituée du boîtier de soupape (1), d'un élément de commande se composant de l'obturateur de soupape (18) et de l'organe d'actionnement tournant (19), et d'un dispositif de blocage (23) servant à la liaison axiale entre le boîtier de soupape (1) et l'élément de commande (17).

11. Soupape à plusieurs voies selon l'une des revendications 1 à 10, **caractérisée en ce que** le tronçon de commande (27) de l'obturateur de soupape (18) dispose uniquement de deux cloisons (32) qui, vues dans une coupe transversale à l'axe de rotation, sont disposées dans une configuration en V, de sorte qu'il en résulte deux évidements (34, 35) de type secteur, vues en coupe transversale.

12. Soupape à plusieurs voies selon la revendication 11, **caractérisée en ce que** le premier évidement (34) communiquant avec l'ajour (37) présente, par rapport à l'axe de rotation de l'obturateur de soupape (18), une étendue périphérique moindre que le deuxième évidement (35).

13. Soupape à plusieurs voies selon la revendication 11 ou 12, **caractérisée en ce que** l'ajour (37) communiquant avec le premier évidement (34) présente une section transversale de type secteur.
